# FASCICULE DE BREVET EUROPEEN

(11) **EP 3 880 593 B1**
(45) Date de publication et mention de la délivrance du brevet: **08.03.2023**
(21) Numéro de dépôt: 19832430.3
(22) Date de dépôt: 13.11.2019
(51) Int. Cl.: B65H 19/30, B65H 19/12, B29D 30/00

(54) **PROCEDE ET INSTALLATION DE TRANSFERT DE DEVIDOIRS**
VERFAHREN UND ANLAGE ZUR ÜBERTRAGUNG VON SPULEN
METHOD AND FACILITY FOR TRANSFERRING REELS

(30) Priorité: 15.11.2018 FR 1860541
(43) Date de publication de la demande: 22.09.2021
(73) Titulaire: COMPAGNIE GENERALE DES ETABLISSEMENTS MICHELIN, 63040 Clermont-Ferrand (FR)
(72) Inventeur: DETTORRE, Jean-Marie, 63040 CLERMONT-FERRAND CEDEX 9 (FR); QUERAUD, Hervé, 63040 CLERMONT-FERRAND CEDEX 9 (FR); RAVAT, Stéphane, 63040 CLERMONT-FERRAND CEDEX 9 (FR); JAUNET, Nicolas, 63040 CLERMONT-FERRAND CEDEX 9 (FR)
(74) Mandataire: Redouté, Gilles Pierre
(86) Numéro de dépôt international: PCT/FR2019/052694
(87) Numéro de publication internationale: WO 2020/099781

(56) Documents cités:
- JP-A- 2000 025 124
- US-A1- 2015 343 730

## Description

La présente invention se rapporte au domaine de la fabrication d'ébauches de pneumatiques, et plus précisément à un procédé et à une installation de transfert de dévidoirs pour l'alimentation en produits élastomériques de machines de fabrication d'ébauches de pneumatiques.

Les produits élastomériques employés dans la fabrication d'ébauches de pneumatiques, prennent généralement la forme de nappes ou de bandes continues, éventuellement renforcées, et sont disposés sur un support antiadhésif aussi appelé intercalaire. Chaque ensemble formé par un intercalaire et un produit est enroulé sur une bobine durant le stockage et le transport du produit.

Une machine de fabrication d'ébauches de pneumatique comprend généralement un tambour, des postes de pose et des postes d'alimentation. Les produits élastomériques sont posés circonférentiellement sur le tambour à l'aide du poste de pose afin de former une ébauche de pneumatique. Chaque poste de pose tire un produit élastomérique depuis un poste d'alimentation. Le poste d'alimentation déroule l'ensemble formé par l'intercalaire et le produit de la bobine, et retire l'intercalaire, alimentant ainsi en produit la machine de fabrication d'ébauche de pneumatiques.

La bobine est généralement transférée depuis un stockage jusqu'au poste d'alimentation de la machine de fabrication d'ébauches de pneumatiques, par un opérateur qui fait rouler la bobine sur la tranche de ses deux flasques latéraux ou, par l'intermédiaire d'un dévidoir mobile sur lequel la bobine a été préalablement chargée, le dévidoir étant poussé par un opérateur. Un tel procédé, et respectivement une telle installation, est divulguée par US 2015/343730 A1, qui divulgue le préambule des revendications indépendantes 1 et 10. Toutefois, les opérations de transfert sont des tâches peu ergonomiques, répétitives et ne présentant pas de valeur ajoutée.

Il est courant d'automatiser de telles opérations de transfert au moyen de plateformes mobiles autonomes, aussi appelées véhicules à guidage automatique. Une telle plateforme est apte à se positionner sous un contenant telle dévidoir sur lequel une bobine est éventuellement chargée, à le soulever et à le déplacer jusqu'à la destination souhaitée sans l'intervention d'un opérateur.

Les plateformes mobiles autonomes reçoivent des instructions de missions depuis une unité de contrôle. Lorsqu'une bobine située dans un poste d'alimentation doit être changée, l'unité de contrôle qui gère le fonctionnement des machines de fabrication d'ébauches de pneumatiques, décide de transmettre une instruction de mission d'évacuation et/ou d'alimentation à une ou plusieurs plateformes mobiles disponibles. Une mission d'évacuation a pour but de positionner une plateforme mobile sous un dévidoir mobile alimentant une machine de fabrication d'ébauches de pneumatiques, de le soulever et de le déplacer jusqu'à une aire de chargement. L'instruction de mission d'alimentation a pour but de positionner une plateforme mobile sous un dévidoir situé sur l'aire de chargement, de le soulever et de le déplacer dans le poste d'alimentation d'une machine de fabrication d'ébauches de pneumatiques.

Néanmoins, le fonctionnement d'une telle installation de transfert présente l'inconvénient d'être peu efficace, par exemple lorsque le nombre d'instructions de missions transmissibles simultanément par l'unité de contrôle excède le nombre de plateformes mobiles disponibles. Un tel dysfonctionnement peut ainsi provoquer l'arrêt d'une machine de fabrication d'ébauches de pneumatiques, faute de produit disponible. Il peut alors s'avérer nécessaire de mettre en oeuvre des solutions augmentant le coût et l'encombrement de l'installation de transfert ou de la machine de fabrication d'ébauches de pneumatiques, comme par exemple l'augmentation du nombre de plateformes mobiles ou l'implantation de stockage tampon entre les postes d'alimentation et les postes de pose.

Un objectif de l'invention est de remédier aux inconvénients de l'état de la technique et d'apporter une solution originale permettant d'améliorer l'ergonomie et la flexibilité d'une installation de transfert de dévidoirs. Un autre objectif de l'invention est de proposer une installation de transfert de fonctionnement optimisé afin de réduire son coût et son encombrement, tout en évitant l'arrêt d'une machine de fabrication d'ébauches de pneumatiques.

Cet objectif est atteint par l'invention qui propose un procédé de transfert de dévidoirs pour l'alimentation en produits élastomériques de machines de fabrication d'ébauches de pneumatiques à l'aide d'une installation de transfert, chaque produit étant enroulé sur une bobine, ladite installation comprenant une unité de contrôle, des dévidoirs, et au moins une plateforme mobile autonome apte à supporter et déplacer un dévidoir, chaque dévidoir étant apte à supporter une bobine et à coopérer avec la machine de fabrication d'ébauches de pneumatiques de manière à dérouler le produit enroulé sur ladite bobine et alimenter ladite machine en produit, le procédé étant **caractérisé en ce que** ladite installation comprend des moyens d'évaluation de l'état des dévidoirs, lesdits moyens d'évaluation comportant des moyens de mesure de la quantité de produit enroulé sur des bobines supportées par lesdits dévidoirs, et des moyens de communication aptes à transmettre les données mesurées par les dits moyens de mesure à l'unité de contrôle, le procédé comprenant les opérations successives suivantes:
mesurer la quantité de produit enroulé sur les bobines supportées par lesdits dévidoirs alimentant les machines de fabrication d'ébauches de pneumatiques, à l'aide des moyens de mesure, et communiquer les données mesurées à l'unité de contrôle à l'aide des moyens de communication,
en fonction des données mesurées, déterminer à l'aide de l'unité de contrôle le moment auquel transmettre une instruction de mission d'évacuation ou d'alimentation à une plateforme mobile de manière à ce que, la plateforme mobile soit positionnée sous le dévidoir destiné à être évacué d'une machine de fabrication d'ébauches de pneumatiques avant le ou au moment où le dévidoir doit être évacué, et/ou de manière à ce que le dévidoir destiné à alimenter une machine de fabrication d'ébauches de pneumatiques soit positionné à proximité immédiate de ladite machine de fabrication d'ébauches de pneumatiques au moyen d'une plateforme mobile, avant le ou au moment où le dévidoir doit être transféré dans la machine de fabrication d'ébauches de pneumatiques,
transmettre une instruction de mission d'évacuation ou d'alimentation d'un dévidoir à une plateforme mobile au moment précédemment déterminé,
déplacer la plateforme mobile de manière à ce qu'elle se positionne sous le dévidoir destiné à être évacué d'une machine de fabrication d'ébauches de pneumatiques, ou déplacer la plateforme mobile supportant le dévidoir destiné à alimenter une machine de fabrication d'ébauches de pneumatiques de manière à ce qu'elle se positionne à proximité immédiate de la machine de fabrication d'ébauches de pneumatiques.

Le procédé de transfert de dévidoir selon l'invention, utilise des moyens partiellement ou complètement automatisés ce qui permet d'éviter l'intervention d'un opérateur. Une plateforme mobile autonome est un moyen compact, flexible et manoeuvrant permettant le déplacement d'un dévidoir, et facilitant l'implantation de l'installation de transfert. L'utilisation d'une plateforme mobile autonome permet un gain de productivité de l'installation de transfert, car la plateforme mobile autonome peut enchaîner les missions sans attendre, dès que ses batteries sont suffisamment chargées. Les moyens de mesure permettent d'anticiper le moment où la bobine devra être évacuée du poste d'alimentation et ainsi d'optimiser l'utilisation de la ou des plateformes mobiles de manière à minimiser le coût de l'installation de transfert, de maîtriser le nombre d'ébauches de pneumatiques sur lesquels ledit produit peut être posé. Les moyens de mesure permettent également de minimiser les chutes de produit en aboutant les produits non utilisés de même référence entre eux de manière à former un produit apte à être posé sur au moins une ébauche de pneumatique.

Avantageusement, les moyens de mesure de la quantité de produit sont agencés sur les machines de fabrication d'ébauches de pneumatiques et lesdits moyens de communication sont confondus avec des moyens de communication desdites machines de fabrication.

Les moyens de mesure sont facilement implantables sur les machines de fabrication d'ébauches de pneumatiques qui disposent des sources d'énergies nécessaires pour alimenter les moyens de mesure. Les moyens de mesure bénéficient de la disponibilité des moyens de communications de la machine de fabrication avec lesquels ils peuvent relayer les données mesurées à l'unité de contrôle.

De préférence, chaque dévidoir comporte des moyens d'identification dudit dévidoir, de préférence une puce du type RFID, et des moyens de localisation dudit dévidoir, de préférence, une balise Bluetooth.

La connaissance précise de l'identification, ainsi que la localisation et les déplacements des dévidoirs permet d'optimiser le nombre des dévidoirs, la localisation des sites de stockage de dévidoirs et, lorsque un enroulement de produit est supporté par le dévidoir, d'autres informations d'état de la bobine comme le délai de vieillissement dudit produit. Une puce du type RFID est un moyen simple et passif de stocker des données et notamment des données d'identification. Une balise RFID est un moyen simple, peu encombrant et consommant peu d'énergie, permettant la localisation d'un dévidoir.

Avantageusement, la machine de fabrication d'ébauches de pneumatiques comprend au moins un logement dans lequel un dévidoir est apte à être logé par une plateforme mobile, et deux accès distincts audit logement aptes à être empruntés par une plateforme mobile supportant un dévidoir, le procédé comprenant les opérations successives suivantes :
déplacer une première plateforme mobile supportant un premier dévidoir jusqu'à une position adjacente au premier accès,
déplacer une seconde plateforme supportant un second dévidoir au travers du second accès de manière à évacuer le second dévidoir du logement,
déplacer la première plateforme mobile au travers du premier accès, et loger le premier dévidoir dans le logement.

Ainsi, le temps nécessaire au remplacement d'une bobine est optimisé.

De préférence, chaque plateforme mobile comprend au moins un radar, le procédé comprenant, lors des opérations de déplacement de la plateforme mobile, les opérations successives suivantes :
scanner l'environnement de la machine de fabrication d'ébauches de pneumatiques à l'aide du radar,
identifier la machine de fabrication d'ébauches de pneumatiques,
contourner les obstacles identifiés lors du déplacement de la plateforme mobile.

Avantageusement, l'unité de contrôle de l'installation de transfert communique avec un automate de pilotage d'un atelier de fabrication d'ébauches de pneumatiques dans lequel se trouve la machine de fabrication d'ébauches de pneumatiques à alimenter en produits élastomériques.

De préférence, le procédé comprend l'opération suivante :
après avoir reçu une information d'achèvement de mission d'alimentation ou d'évacuation par une plateforme mobile, transmettre à la plateforme mobile une instruction pour commencer une nouvelle mission d'alimentation ou d'évacuation, à l'aide de l'unité de contrôle.

Avantageusement, chaque plateforme mobile est montée sur des roues motrices et comprend des moteurs assurant l'entrainement des roues et des batteries d'alimentation en électricité, le procédé comprenant l'opération suivante :
après que la plateforme mobile ait vérifié le niveau de ses batteries, commencer une nouvelle mission d'alimentation ou d'évacuation.

De préférence, l'installation de transfert comprend une station d'accueil, apte à charger les batteries d'une plateforme mobile, le procédé comprenant l'opération suivante : dès que le niveau de ses batteries est descendu en dessous d'une limite prédéterminée, déplacer une plateforme mobile jusqu'à la station d'accueil et charger la plateforme mobile.

L'invention a également pour objet une installation de transfert de dévidoirs pour l'alimentation en produits élastomériques de machines de fabrication d'ébauches de pneumatiques, chaque produit étant enroulé sur une bobine, ladite installation comprenant une unité de contrôle, des dévidoirs, et au moins une plateforme mobile autonome apte à supporter et déplacer un dévidoir, chaque dévidoir étant apte à supporter une bobine et à coopérer avec la machine de fabrication d'ébauches de pneumatiques de manière à dérouler le produit enroulé sur ladite bobine et alimenter ladite machine en produit, l'installation étant **caractérisée en ce que** ladite installation comprend des moyens d'évaluation de l'état des dévidoirs, lesdits moyens d'évaluation comportant des moyens de mesure de la quantité de produit enroulé sur des bobines supportées par lesdits dévidoirs, et des moyens de communication aptes à transmettre les données mesurées par les dits moyens de mesure à l'unité de contrôle.

L'invention sera mieux comprise grâce à la suite de la description, qui s'appuie sur les figures suivantes :
- la figure 1 est une vue de dessus d'une installation d'alimentation en produits élastomériques de machines de fabrication d'ébauches de pneumatiques ;
- la figure 2 est une vue en perspective illustrant une plateforme mobile de l'installation d'alimentation de la figure 1 ;
- la figure 3 est une vue de côté illustrant certains éléments de l'installation d'alimentation de la figure 1 ;
- la figure 4 est un diagramme de définition de bloc illustrant les flux des communications entre certains éléments de l'installation d'alimentation de la figure 1 ;
- la figure 5 est une vue en perspective illustrant notamment un poste de préparation de l'installation d'alimentation de la figure 1 ;
- la figure 6 est un diagramme de définition de bloc illustrant des opérations d'un procédé de transfert de dévidoir ;
- la figure 7 est un diagramme de définition de bloc illustrant des opérations d'un procédé d'alimentation en produit élastomérique.

Sur les différentes figures, les éléments identiques ou similaires portent la même référence. Leur description n'est donc pas systématiquement reprise.

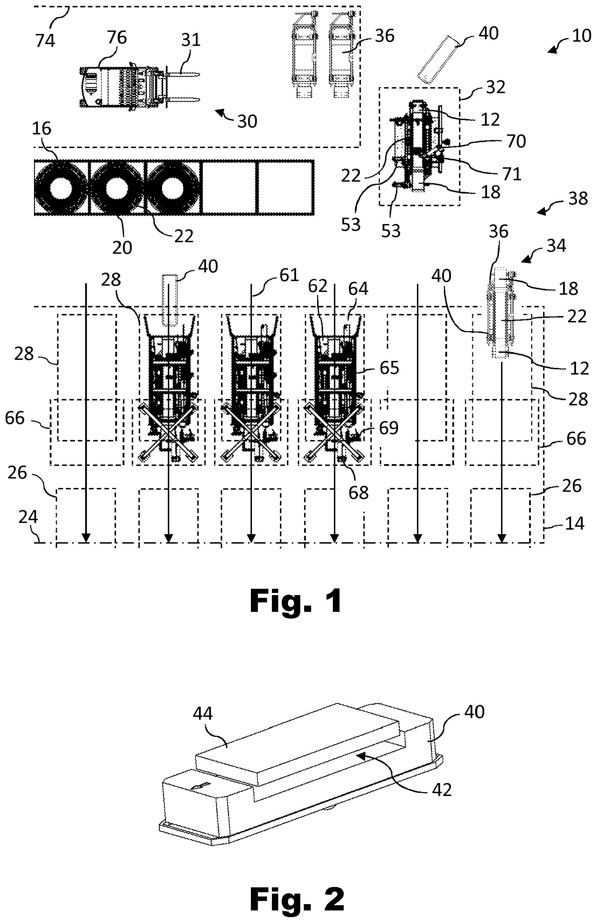

Comme l'illustre la figure 1, l'invention est relative à une installation d'alimentation 10 en produits élastomériques 12 de machines de fabrication 14 d'ébauches de pneumatiques. L'installation d'alimentation est située en aval, dans le sens de déplacement des produits élastomériques, d'un stockage 16 de produits élastomériques et en amont de machines de fabrication d'ébauches de pneumatiques.

Par produit élastomérique 12, on entend un produit comprenant une matrice d'élastomère éventuellement renforcée par des éléments filaires textiles ou métalliques. Le produit 12 est continu et prend la forme d'une nappe, ou encore, d'une ou plusieurs bandes disposées parallèlement les unes aux autres. Le produit est disposé longitudinalement sur un support antiadhésif 18, aussi appelé intercalaire, permettant le stockage et le transport du produit sous la forme d'un enroulement 20. L'ensemble formé par le produit et le support antiadhésif est enroulé sur le moyeu d'une bobine 22. Sur le stockage 16, la bobine est disposée dans une position allongée. Autrement dit, la bobine repose à plat sur un de ses flasques latéraux, et l'enroulement 20 forme un cylindre de révolution d'axe vertical. Une position allongée de la bobine permet une meilleure conservation de la forme du produit 12.

Une machine de fabrication 14 d'ébauches de pneumatique comprend généralement un tambour (non représenté) en forme de cylindre de révolution comprenant un axe de révolution 24 autour duquel le tambour est mobile en rotation et le long duquel le tambour est mobile en translation. La machine de fabrication comprend également au moins un poste de pose 26 et au moins un poste d'alimentation 28 de produits élastomériques 12. Les produits élastomériques sont posés circonférentiellement sur le tambour à l'aide du poste de pose afin de former une ébauche de pneumatique. Chaque produit élastomérique est tiré lors de sa pose depuis le poste d'alimentation. A titre d'exemple, une machine de fabrication d'ébauches de pneumatiques convenant particulièrement bien à la mise en oeuvre de l'installation d'alimentation 10 comprend une pluralité de postes d'alimentation, disposés parallèlement les uns par rapport aux autres, perpendiculairement à l'axe de révolution 24 d'un ou plusieurs tambours.

L'installation d'alimentation 10 comprend notamment un organe de chargement 30, un poste de préparation 32 et au moins un organe de transfert 34 comportant un dévidoir 36. L'organe de transfert appartient également à une installation de transfert 38, et est apte à transférer une bobine 22 du poste de préparation jusqu'à un poste d'alimentation 28 de la machine de fabrication 14 d'ébauches de pneumatiques. A titre d'exemple, une installation d'alimentation comprend trois organes de transfert pour huit postes d'alimentation, et vingt-quatre dévidoirs. L'organe de chargement 30 est apte à charger une bobine 22 sur un dévidoir. Le poste de préparation est notamment apte à enrouler ou dérouler l'ensemble formé par le produit 12 et le support antiadhésif 18.

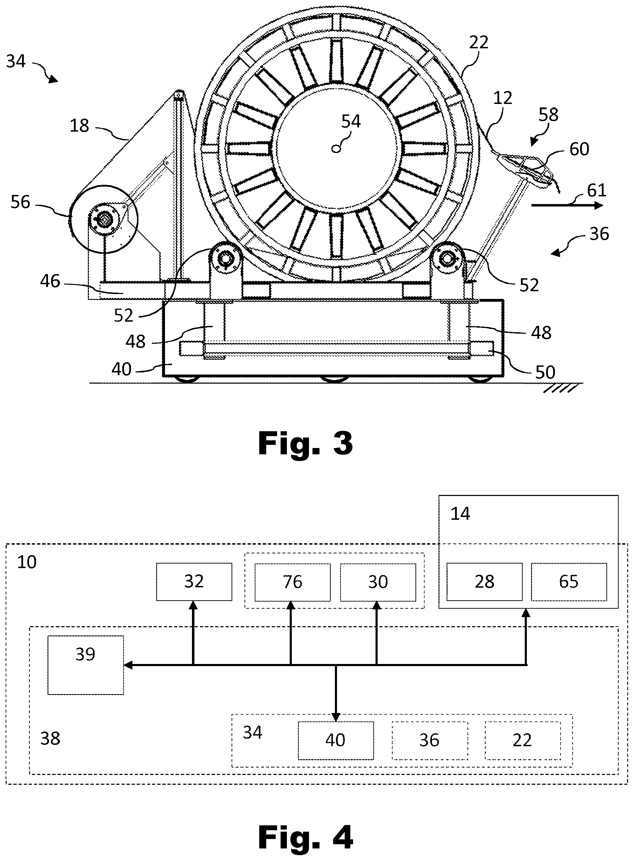

L'installation d'alimentation 10 et l'installation de transfert 38 comprennent une unité de contrôle 39 (figure 4) appartenant à un automate de pilotage d'un atelier dans lequel se trouve une installation d'alimentation en produits élastomériques 12 et des machines de fabrication 14 d'ébauches de pneumatiques. L'installation de transfert comprend en outre des dévidoirs 36 et au moins une plateforme mobile 40 apte à supporter et déplacer un dévidoir. L'ensemble formé par une plateforme mobile et un dévidoir est également appelé un organe de transfert 34 d'une bobine 22.

La plateforme mobile 40 illustrée à la figure 2 est autonome, et est apte à effectuer des missions d'évacuation d'un dévidoir 36 ou d'alimentation en dévidoir de la machine de fabrication 14 d'ébauches de pneumatiques. L'unité de contrôle 39 programme et transmet les instructions de missions aux plateformes mobiles. Par autonome, on entend que la plateforme mobile est capable de se déplacer sans intervention humaine. La plateforme mobile comprend des moyens de guidage et des moyens de communication avec l'unité de contrôle 39, par exemple par wifi. A titre d'exemple, le guidage d'une plateforme mobile autonome peut être du type filoguidage, laserguidage, optoguidage ou encore géoguidage. De préférence, le guidage d'une plateforme mobile autonome est du type laserguidage et utilise des algorithmes du type SLAM permettant à la plateforme de s'adapter à son environnement. Les plateformes mobiles autonomes 40 sont d'usage flexible et ne nécessitent pas d'aménagements d'infrastructures ni de travaux. Ainsi, l'intégration de l'installation de transfert 38 entre le stockage 16 et les machines de fabrication 14 d'ébauches de pneumatiques est facilitée.

Les moyens de guidage de la plateforme mobile 40 comprennent des capteurs tel un radar pour scanner et identifier l'environnement de la plateforme mobile et/ou des centrales inertielles, ou encore des repères magnétiques permettant à la plateforme mobile de se repérer dans son environnement. Les moyens de guidage comprennent en outre un contrôleur à microprocesseurs pour calculer le trajet de la plateforme en fonction de la destination visée dans une instruction de mission transmise à la plateforme mobile par l'unité de contrôle 39, et des données recueillies par les capteurs. La plateforme mobile identifie également les éventuels obstacles ou les personnes présentes dans son environnement et peut décider de calculer le trajet le plus efficace pour les contourner et atteindre sa destination.

La plateforme 40 comprend un dispositif de levage 42 qui coopère avec un contenant tel un dévidoir 36. Le contenant de forme généralement rectangulaire est supporté par quatre appuis et est conçu de manière à ce que, lorsque le contenant repose au sol sur ses appuis et lorsque le dispositif de levage est inactif, la plateforme puisse se positionner sous le contenant. Lorsque la plateforme est positionnée sous un contenant et lorsque le dispositif de levage est actif, le contenant est soulevé par le dispositif de levage de manière à ce que ses quatre appuis ne reposent plus sur le sol. La plateforme mobile est ainsi en mesure de déplacer le contenant. Le dispositif de levage comprend un plateau 44 formant une partie de la surface supérieure de la plateforme et un actionneur (non représenté) tel un vérin ou un pantographe mû par un système vis-écrou.

La plateforme mobile 40 comprend un châssis de forme généralement rectangulaire. Le châssis est supporté par au moins trois roues. A titre d'exemple, le châssis peut comporter quatre ou six roues dont au moins une roue est motrice. De préférence, chaque roue est orientable d'un angle allant jusqu'à 90° pour permettre à la plateforme mobile d'accoster latéralement sa destination, par exemple le poste d'alimentation 28. Ainsi, la plateforme d'être très manoeuvrable dans un espace restreint. Chaque roue motrice est entrainée par un moteur électrique qui est alimenté par des batteries d'alimentation électrique implantées sur le châssis de la plateforme mobile.

L'installation de transfert comprend une station d'accueil (non illustrée), apte à charger les batteries d'une plateforme mobile 40. Lorsque la plateforme mobile n'est pas en mission d'évacuation ou d'alimentation, la plateforme mobile se déplace jusqu'à la station dans laquelle elle se branche sur une borne de recharge en électricité.

Un dévidoir 36 tel qu'illustré à la figure 3 comprend un châssis 46 de forme généralement rectangulaire. Le châssis est supporté par quatre appuis 48 agencés à chaque angle du châssis. Les appuis du châssis sont reliés par deux guides 50 selon deux côtés opposés du châssis. Un guide a pour fonction de faciliter les déplacements de la plateforme mobile 40 entre les appuis du dévidoir. Un dévidoir comprend en outre deux rouleaux 52 parallèles, chaque rouleau étant monté mobile en rotation par rapport au châssis 46. Les rouleaux ont pour fonction de supporter une bobine 22, et de permettre le déroulage ou l'enroulage du produit élastomérique 12 contenu sur la bobine. Les rouleaux sont actionnés en rotation par au moins un moteur 53 intégré au châssis du dévidoir ou, de préférence, intégré aux postes d'alimentation 28 et de préparation 32 auquel cas le moteur comprend des moyens d'accouplement avec les rouleaux. Le moteur 53 entraine une courroie du dévidoir reliée aux rouleaux permettant ainsi de les entrainer en rotation. Une bobine est disposée dans une position redressée sur le dévidoir. Autrement dit, la bobine repose sur les rouleaux par la tranche de ses flasques latéraux, et la bobine ainsi positionnée est mobile en rotation autour d'un axe horizontal 54.

Un dévidoir comprend également un bobinot 56 et un présentoir 58. Par bobinot, on entend une bobine de petites dimensions par comparaison aux dimensions de la bobine 22 contenant le produit élastomérique 12. Le bobinot a pour fonction de recevoir, autour de son moyeu, le support antiadhésif 18 après que celui-ci ait été séparé du produit élastomérique. Le bobinot 56 est monté mobile en rotation par rapport au châssis 46 parallèlement à l'axe de rotation 54 de la bobine, sur la face arrière du dévidoir ou, autrement dit, à l'opposé du sens de tirage du produit. Le bobinot est entrainé en rotation au moyen d'un moteur 53 de manière à enrouler ou dérouler le support antiadhésif. A titre d'exemple, le moteur est implanté sur le châssis 46 du dévidoir ou, de préférence, intégré aux postes d'alimentation et de préparation auquel cas le moteur 53 comprend des moyens d'accouplement avec les rouleaux. Le présentoir 58 a pour fonction de supporter le produit afin de faciliter sa manutention ultérieure. Le présentoir comprend une tablette 60 disposée sur la face avant du dévidoir ou, autrement dit, dans le sens 61 de tirage du produit.

Un poste d'alimentation 28 comprend un logement 62 et au moins un accès 64 au logement depuis l'extérieur de la machine de fabrication 14 d'ébauche de pneumatiques. L'accès est apte à être emprunté par une plateforme mobile 40 chargée d'un dévidoir 36 ou par une plateforme mobile seule. Le logement est apte à loger et positionner précisément une plateforme mobile chargée d'un dévidoir. De préférence, le poste d'alimentation comprend deux accès, par exemple un premier accès sur la face arrière du poste d'alimentation 28 dans le sens opposé au sens de tirage du produit, et un second accès (non représenté) sur une face latérale du poste d'alimentation. Ainsi, dès qu'une première plateforme mobile 40 a évacué un dévidoir du logement 62 en empruntant le premier accès, une seconde plateforme mobile n'a pas à attendre que la première plateforme mobile libère le premier accès au logement. La seconde plateforme mobile peut immédiatement accéder au logement libre et ainsi, réduire le temps nécessaire au changement d'une bobine. Le logement du poste d'alimentation est formé par une enceinte grillagée et l'accès au logement est formé par une ouverture dans l'enceinte. De préférence, l'installation de transfert comprend des plots de positionnement disposés au sol permettant à la plateforme mobile de se positionner rapidement et de compenser le manque de précision en positionnement d'une plateforme mobile.

Une installation de transfert 38 comprend des moyens d'évaluation de l'état d'une bobine 22. A titre d'exemple, les moyens d'évaluation de l'état d'une bobine peuvent être agencés sur le dévidoir 36, au poste de préparation 32 ou au poste d'alimentions 28. Par état d'une bobine, on entend par exemple l'identifiant ou la localisation de la bobine, la référence, la quantité et le délai de vieillissement du produit contenu sur la bobine ou encore, la température et l'hygrométrie de l'air dans l'environnement de la bobine. Les moyens d'évaluation de l'état d'une bobine permettent d'optimiser la qualité des produits 12 alimentant une machine de fabrication 14 d'ébauches de pneumatiques, le fonctionnement et les moyens nécessaires au fonctionnement de l'installation de transfert 38.

Les moyens d'évaluation de l'état d'une bobine 22 comprennent notamment des moyens de mesure 65 de la quantité de produit 12 contenu sur la bobine. De préférence, les moyens de mesure de la quantité de produit sont agencés sur les machines de fabrication 14 d'ébauches de pneumatiques et lesdits moyens de communication sont confondus avec des moyens de communication desdites machine de fabrication. La mesure de la quantité de produit enroulé sur des bobines supportées par des dévidoirs 36 alimentant les machines de fabrication 14 permet d'anticiper les instructions de mission transmises aux plateformes mobiles 40 en vue du changement d'une bobine et ainsi, de minimiser l'emploi et le nombre des plateformes mobiles.

L'unité de contrôle 39 détermine le moment auquel transmettre une instruction de mission d'évacuation ou d'alimentation à une plateforme mobile 40 de manière à ce que, la plateforme mobile soit positionnée sous le dévidoir 36 destiné à être évacué d'une machine de fabrication 14 avant le ou au moment où le dévidoir doit être évacué, et/ou de manière à ce que le dévidoir destiné à alimenter une machine de fabrication d'ébauches de pneumatiques soit positionné à proximité immédiate de ladite machine de fabrication d'ébauches de pneumatiques au moyen d'une plateforme mobile, avant le ou au moment où le dévidoir doit être transféré dans la machine de fabrication d'ébauches de pneumatiques.

A titre d'exemple, les moyens de mesure prennent la forme d'un télémètre apte à mesurer la distance le séparant de l'enroulement permettant ainsi de connaître le diamètre de l'enroulement 20. La connaissance du diamètre de l'enroulement donne une connaissance approximative de la longueur de produit contenu sur la bobine à plus ou moins le périmètre de l'enroulement à un instant donné. Le télémètre est, de préférence, associé à un codeur rotatif permettant de connaître la position angulaire de la bobine sur le dévidoir. L'association des mesures du télémètre et du codeur permet d'affiner la connaissance de la longueur de produit contenu sur la bobine. Le télémètre et le codeur sont agencés sur le poste de préparation 28 et reliés au contrôleur de la machine de fabrication 14.

Le dévidoir 36 comprend également des moyens de localisation dudit dévidoir, tel un capteur de type GPS ou, de préférence, une balise Bluetooth. Une balise Bluetooth transmet son identifiant à un récepteur appartenant à l'installation de transfert 38, et communique avec l'unité de contrôle 39. L'unité de contrôle est ainsi en mesure de répertorier les déplacements des dévidoirs en vue de déterminer et programmer des instructions de missions optimisées. La connaissance des déplacements des dévidoirs permet également d'optimiser le positionnement des différents éléments d'une installation d'alimentation 10 en produits élastomériques 12 et/ou de transfert de dévidoir.

Une machine de fabrication 14 d'ébauches de pneumatiques comprend en outre un poste d'aboutage 66 situé en aval du poste d'alimentation 28 et en amont du poste de pose 26. Le poste d'aboutage a pour fonction d'abouter automatiquement l'extrémité du produit 12 déroulé d'une bobine 22 au poste d'alimentation, avec l'extrémité résiduelle d'un précédent produit alimentant la machine de fabrication d'ébauches de pneumatiques. A cette fin, le poste d'aboutage comprend un bras manipulateur 68 collaboratif. Par bras manipulateur, on entend un bras manipulateur automatisé du type anthropomorphe à six axes, formé d'une série de tronçons articulés les uns aux autres. Par bras manipulateur collaboratif, on entend un bras manipulateur apte à collaborer avec un opérateur sans enceinte de sécurité. Le bras manipulateur collaboratif comporte des capteurs de force ou de proximité agissant sur ledit bras détectant l'approche d'un opérateur ou d'un objet. De plus, le bras manipulateur collaboratif est limité en vitesse et en force afin de réduire la gravité d'une collision avec un opérateur. Le segment en extrémité libre du bras manipulateur comprend un effecteur 69, par exemple une pince, apte à découper le produit élastomérique 12 de manière à ce que les extrémités à abouter présentent des sections régulières, et apte à agencer puis comprimer l'une sur l'autre lesdites extrémités de manière à les solidariser.

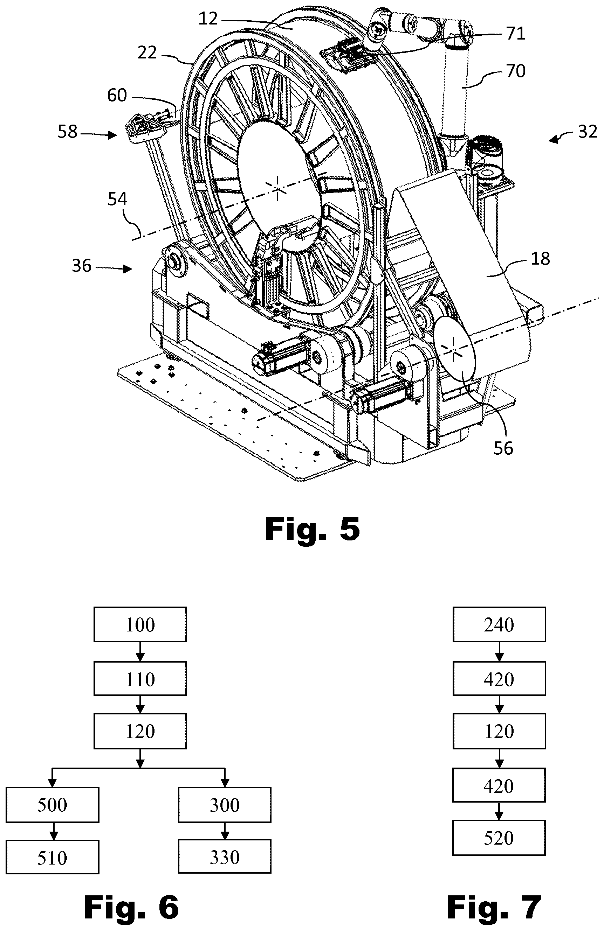

Comme illustré aux figures 1 et 5, le poste de préparation 32 est situé en amont du stockage 16 et en aval des machines de fabrication 14 d'ébauches de pneumatiques, dans le sens de circulation des produits élastomériques 12. Le poste de préparation comprend un bras manipulateur collaboratif 70. Le segment en extrémité libre du bras manipulateur comprend un effecteur 71, par exemple une pince, apte à agencer l'extrémité du produit et l'extrémité du support antiadhésif 18 de manière à ce que l'extrémité du produit soit disposée sur le présentoir 58 du dévidoir 36 et à ce que l'extrémité du support antiadhésif soit enroulée sur un bobinot 56 du dévidoir.

L'organe de chargement 30 est situé sur une aire de chargement 74 et est apte à charger une bobine 22 sur un dévidoir 36. A titre d'exemple, l'organe de chargement prend la forme d'un bras manipulateur muni d'une pince apte à manipuler une bobine ou, de préférence, de fourches rotatives 31 agencées sur un appareil de manutention 76. L'appareil de manutention est, de préférence, du type chariot élévateur autonome. Les fourches rotatives agencées sur le chariot élévateur autonome permettent de saisir une bobine sur le stockage 16, de la pivoter d'une position allongée à une position redressée et de la disposer sur les rouleaux 52 d'un dévidoir. Le chariot élévateur autonome est apte à transférer automatiquement une bobine entre le stockage et un dévidoir sans l'intervention d'un opérateur. L'appareil de manutention comprend des moyens de communication avec l'unité de contrôle 39 afin de recevoir des instructions de missions de transfert et de manipulation d'une bobine, et afin de transmettre des données d'état, tel que la position de l'appareil de manutention ou l'état d'avancement des missions de transfert et de manipulation d'une bobine.

On a illustré aux figures 6 et 7 un procédé d'alimentation en produits élastomériques 12 de machines de fabrication 14 d'ébauches de pneumatiques, et un procédé de transfert de dévidoirs 36 pour l'alimentation en produits élastomériques de machines de fabrication d'ébauches de pneumatiques.

On mesure 100 la quantité de produit enroulé sur des bobines 22 supportées par des dévidoirs 36 alimentant les machines de fabrication 14 d'ébauches de pneumatiques, à l'aide des moyens d'évaluation de chaque dévidoir, et on communique 110 les données mesurées à une unité de contrôle 39 à l'aide des moyens de communication de la machine de fabrication 14.

En fonction des données mesurées, on détermine 120 à l'aide de l'unité de contrôle 39 le moment auquel transmettre une instruction de mission d'évacuation ou d'alimentation à une plateforme mobile de manière à ce que, la plateforme mobile soit positionnée sous le dévidoir destiné à être évacué d'une machine de fabrication d'ébauches de pneumatiques avant le ou au moment où le dévidoir doit être évacué, et/ou de manière à ce que le dévidoir destiné à alimenter une machine de fabrication d'ébauches de pneumatiques soit positionné à proximité immédiate de ladite machine de fabrication d'ébauches de pneumatiques au moyen d'une plateforme mobile, avant le ou au moment où le dévidoir doit être transféré dans la machine de fabrication d'ébauches de pneumatiques.

On transmet 200 une instruction de mission à un appareil de manutention autonome 76 à l'aide d'une unité de contrôle 39. On saisit 210 une bobine 22 sur un stockage 16 à l'aide de l'organe de chargement 30. On pivote 220 la bobine d'une position allongée à une position redressée à l'aide des fourches rotatives de l'organe de chargement 30. On transfère 230 la bobine 22 du stockage 16 jusque dans un dévidoir 36 à l'aide de l'appareil de manutention 76 sur lequel les fourches rotatives sont agencées. On dépose 240 la bobine sur les rouleaux 52 du dévidoir à l'aide de l'organe de chargement 30. On transmet 250 à l'unité de contrôle 39 des données concernant l'état d'avancement de la mission à l'aide des moyens de communication de l'appareil de manutention 76.

On transmet 300 une instruction de mission à une plateforme mobile 40 disponible à l'aide de l'unité de contrôle 39. On déplace 310 la plateforme mobile jusqu'au dévidoir 36 sur lequel une bobine 22 a été chargée et on soulève 320 le dévidoir à l'aide d'un dispositif de levage 42 de la plateforme mobile. On déplace 330 ensuite la plateforme mobile jusqu'à un poste de préparation 32.

On s'accouple 400 aux rouleaux 52 du dévidoir 36 puis on les entraine 410 en rotation à l'aide d'un moteur appartenant au poste de préparation 32, entrainant en rotation par la même occasion la bobine 22. On déroule et/ou positionne 420 l'ensemble formé par le produit 12 et le support antiadhésif de manière à ce que le bras manipulateur 70 du poste de préparation soit en mesure de saisir l'extrémité du produit et/ou l'extrémité du support antiadhésif. On agence 430 l'extrémité du support antiadhésif à l'aide du bras manipulateur de manière à la disposer sur un bobinot 56 du dévidoir, et on agence 440 l'extrémité du produit de manière à la disposer sur la tablette 60 d'un présentoir 58.

On transmet 500 une instruction de mission d'évacuation ou d'alimentation d'un dévidoir 36 à une plateforme mobile 40 à l'aide de l'unité de contrôle 39. On déplace 510 la plateforme mobile de manière à ce qu'elle se positionne sous le dévidoir 36 destiné à être évacué d'une machine de fabrication d'ébauches de pneumatiques, ou on déplace 520 la plateforme mobile supportant le dévidoir destiné à alimenter une machine de fabrication d'ébauches de pneumatiques de manière à ce qu'elle se positionne à proximité immédiate du poste d'alimentation 28 de la machine de fabrication 14 d'ébauches de pneumatiques.

On déplace 600 une première plateforme mobile 40 supportant un premier dévidoir 36 destiné à alimenter une machine de fabrication 14 d'ébauches de pneumatiques jusqu'à une position adjacente à un premier accès 54 appartenant à une machine de fabrication 14 d'ébauches de pneumatiques. On déplace 610 une seconde plateforme supportant un second dévidoir au travers d'un second accès appartenant à une machine de fabrication 14 d'ébauches de pneumatiques de manière à évacuer le second dévidoir du logement. On déplace 620 la première plateforme mobile au travers du premier accès, et on loge 630 le premier dévidoir dans le logement.

On accouple 700 un moteur du poste d'alimentation 28 aux rouleaux 52 du dévidoir 36 supportant la bobine 22 destinée à alimenter une machine de fabrication 14 d'ébauches de pneumatiques et on entraine en rotation la bobine. On aboute 710 automatiquement l'extrémité du produit avec une extrémité résiduelle d'un précédent produit alimentant la machine de fabrication d'ébauches de pneumatiques, à l'aide du bras manipulateur 68 d'un poste d'aboutage 66.

Lorsque la bobine 22 doit être évacuée du poste d'alimentation 28, on transfère 800 la bobine depuis la machine de fabrication 14 d'ébauches de pneumatiques jusqu'au poste de préparation 32 à l'aide d'une plateforme mobile 40. On enroule 810 sur la bobine l'extrémité du produit élastomérique 12 disposée sur le présentoir 58 du dévidoir 36 de manière à ce que l'extrémité du produit soit disposée sur le support antiadhésif 18, et/ou on enroule 820 le support antiadhésif sur la bobine de manière à ce que le support antiadhésif ne soit plus enroulé sur le bobinot 58, à l'aide du moteur du poste de préparation.

De préférence, on positionne 830 en vis-à-vis par leur face avant deux dévidoirs 36 supportant des bobines 22 qui comportent un produit élastomérique 12 de référence identique. On aboute 840 les extrémités des produits disposées sur le présentoir 58 des dévidoirs à l'aide du bras manipulateur 70. On enroule 850 le produit d'un des dévidoirs sur l'autre dévidoir en vis-à-vis.

On décharge 900 la bobine du dévidoir à l'aide de l'organe de chargement. On transfère 910 automatiquement la bobine depuis le poste de préparation jusque dans le stockage à l'aide de l'appareil de manutention.

On scanne l'environnement de la machine de fabrication d'ébauches de pneumatiques à l'aide du radar d'une plateforme mobile 40. On identifie la machine de fabrication d'ébauches de pneumatiques dans l'environnement à l'aide du contrôleur de la plateforme mobile. On contourne les obstacles identifiés lors du déplacement de la plateforme mobile.

Après avoir reçu une information d'achèvement de mission d'alimentation ou d'évacuation par une plateforme mobile 40, on transmet à la plateforme mobile une instruction pour commencer une nouvelle mission d'alimentation ou d'évacuation, à l'aide de l'unité de contrôle 39. Après que la plateforme mobile ait vérifié le niveau de ses batteries, on commence une nouvelle mission d'alimentation ou d'évacuation. Dès que le niveau de ses batteries est descendu en dessous d'une limite prédéterminée, on déplace une plateforme mobile jusqu'à la station d'accueil.

## Revendications

1. Procédé de transfert de dévidoirs (36) pour l'alimentation en produits élastomériques (12) de machines de fabrication (14) d'ébauches de pneumatiques à l'aide d'une installation de transfert (38), chaque produit étant enroulé sur une bobine (22), ladite installation comprenant une unité de contrôle (39), des dévidoirs (36), et au moins une plateforme mobile autonome (40) apte à supporter et déplacer un dévidoir, chaque dévidoir étant apte à supporter une bobine et à coopérer avec la machine de fabrication d'ébauches de pneumatiques de manière à dérouler le produit enroulé sur ladite bobine et alimenter ladite machine en produit, le procédé étant **caractérisé en ce que** ladite installation comprend des moyens d'évaluation de l'état des dévidoirs, lesdits moyens d'évaluation comportant des moyens de mesure (65) de la quantité de produit enroulé sur des bobines supportées par lesdits dévidoirs, et des moyens de communication aptes à transmettre les données mesurées par les dits moyens de mesure à l'unité de contrôle, le procédé comprenant les opérations successives suivantes:
mesurer (100) la quantité de produit enroulé sur les bobines supportées par lesdits dévidoirs alimentant les machines de fabrication d'ébauches de pneumatiques, à l'aide des moyens de mesure, et communiquer (110) les données mesurées à l'unité de contrôle à l'aide des moyens de communication,
en fonction des données mesurées, déterminer (120) à l'aide de l'unité de contrôle le moment auquel transmettre une instruction de mission d'évacuation ou d'alimentation à une plateforme mobile de manière à ce que, la plateforme mobile soit positionnée sous le dévidoir destiné à être évacué d'une machine de fabrication d'ébauches de pneumatiques avant le ou au moment où le dévidoir doit être évacué, et/ou de manière à ce que le dévidoir destiné à alimenter une machine de fabrication d'ébauches de pneumatiques soit positionné à proximité immédiate de ladite machine de fabrication d'ébauches de pneumatiques au moyen d'une plateforme mobile, avant le ou au moment où le dévidoir doit être transféré dans la machine de fabrication d'ébauches de pneumatiques,
transmettre une instruction de mission d'évacuation (500) ou d'alimentation (300) d'un dévidoir à une plateforme mobile au moment précédemment déterminé,
déplacer (510) la plateforme mobile de manière à ce qu'elle se positionne sous le dévidoir destiné à être évacué d'une machine de fabrication d'ébauches de pneumatiques, ou déplacer (330) la plateforme mobile supportant le dévidoir destiné à alimenter une machine de fabrication d'ébauches de pneumatiques de manière à ce qu'elle se positionne à proximité immédiate de la machine de fabrication d'ébauches de pneumatiques.

2. Procédé selon la revendication précédente dans lequel les moyens de mesure (65) de la quantité de produit sont agencés sur les machines de fabrication (14) d'ébauches de pneumatiques et lesdits moyens de communication sont confondus avec des moyens de communication desdites machines de fabrication.

3. Procédé selon l'une des revendications précédentes dans lequel chaque dévidoir (36) comporte des moyens d'identification dudit dévidoir, de préférence une puce du type RFID, et des moyens de localisation dudit dévidoir, de préférence, une balise Bluetooth.

4. Procédé selon l'une des revendications précédentes dans lequel la machine de fabrication d'ébauches de pneumatiques comprend au moins un logement (62) dans lequel un dévidoir (36) est apte à être logé par une plateforme mobile (40), et deux accès distincts audit logement aptes à être empruntés par une plateforme mobile supportant un dévidoir, le procédé comprenant les opérations successives suivantes :
déplacer une première plateforme mobile supportant un premier dévidoir jusqu'à une position adjacente à un premier accès,
déplacer une seconde plateforme supportant un second dévidoir au travers d'un second accès (64) de manière à évacuer le second dévidoir du logement,
déplacer la première plateforme mobile au travers du premier accès, et loger le premier dévidoir dans le logement.

5. Procédé selon l'une des revendications précédentes dans lequel chaque plateforme mobile (40) comprend au moins un radar, le procédé comprenant, lors des opérations de déplacement de la plateforme mobile, les opérations successives suivantes :
scanner l'environnement de la machine de fabrication (14) d'ébauches de pneumatiques à l'aide du radar,
identifier la machine de fabrication d'ébauches de pneumatiques,
contourner les obstacles identifiés lors du déplacement de la plateforme mobile.

6. Procédé selon l'une des revendications précédentes dans lequel l'unité de contrôle (39) de l'installation de transfert (38) communique avec un automate de pilotage d'un atelier de fabrication d'ébauches de pneumatiques dans lequel se trouve la machine de fabrication d'ébauches de pneumatiques à alimenter en produits élastomériques (12).

7. Procédé selon l'une des revendications précédentes comprenant l'opération suivante :
après avoir reçu une information d'achèvement de mission d'alimentation ou d'évacuation par une plateforme mobile, transmettre à la plateforme mobile (40) une instruction pour commencer une nouvelle mission d'alimentation ou d'évacuation, à l'aide de l'unité de contrôle (39).

8. Procédé selon l'une des revendications précédentes dans lequel chaque plateforme mobile (40) est montée sur des roues motrices et comprend des moteurs assurant l'entrainement des roues et des batteries d'alimentation en électricité, le procédé comprenant l'opération suivante :
après que la plateforme mobile ait vérifié le niveau de ses batteries, commencer une nouvelle mission d'alimentation ou d'évacuation.

9. Procédé selon la revendication précédente dans lequel l'installation de transfert comprend une station d'accueil, apte à charger les batteries d'une plateforme mobile (40), le procédé comprenant l'opération suivante :
dès que le niveau de ses batteries est descendu en dessous d'une limite prédéterminée, déplacer une plateforme mobile jusqu'à la station d'accueil et charger la plateforme mobile.

10. Installation de transfert (38) de dévidoirs (36) pour l'alimentation en produits élastomériques (12) de machines de fabrication (14) d'ébauches de pneumatiques, chaque produit étant enroulé sur une bobine (22), ladite installation comprenant une unité de contrôle (39), des dévidoirs, et au moins une plateforme mobile autonome (40) apte à supporter et déplacer un dévidoir, chaque dévidoir étant apte à supporter une bobine et à coopérer avec la machine de fabrication d'ébauches de pneumatiques de manière à dérouler le produit enroulé sur ladite bobine et alimenter ladite machine en produit, l'installation étant **caractérisée en ce que** ladite installation (38) comprend des moyens d'évaluation de l'état des dévidoirs, lesdits moyens d'évaluation comportant des moyens de mesure (65) de la quantité de produit enroulé sur des bobines supportées par lesdits dévidoirs, et des moyens de communication aptes à transmettre les données mesurées par les dits moyens de mesure à l'unité de contrôle (39).

## Patentansprüche

1. Verfahren zur Übertragung von Haspeln (36) zur Versorgung von Maschinen zur Herstellung (14) von Reifenrohlingen mit Elastomerprodukten (12) mithilfe einer Übertragungseinrichtung (38), wobei jedes Produkt auf einer Spule (22) aufgewickelt ist, wobei die Einrichtung eine Steuereinheit (39), Haspeln (36) und wenigstens eine eigenständige mobile Plattform (40), die geeignet ist, eine Haspel zu tragen und zu verlagern, umfasst, wobei jede Haspel geeignet ist, eine Spule zu tragen und mit der Maschine zur Herstellung von Reifenrohlingen so zusammenzuwirken, dass das auf die Spule aufgewickelte Produkt abgewickelt und die Maschine mit dem Produkt versorgt wird, wobei das Verfahren **dadurch gekennzeichnet ist, dass** die Einrichtung Mittel zur Bewertung des Zustands der Haspeln, wobei die Bewertungsmittel Mittel zur Messung (65) der Menge eines Produkts aufweisen, das auf Spulen gewickelt ist, die von den Haspeln getragen werden, und Kommunikationsmittel umfasst, die geeignet sind, die Daten, die von den Messmitteln gemessen werden, an die Steuereinheit zu übertragen, wobei das Verfahren die folgenden aufeinanderfolgenden Schritte umfasst:
Messen (100) der Menge des Produkts, das auf die Spulen gewickelt ist, die von den Haspeln getragen werden, die die Maschinen zur Herstellung von Reifenrohlingen versorgen, mithilfe der Messmittel, und Kommunizieren (110) der gemessenen Daten an die Steuereinheit mithilfe der Kommunikationsmittel,
je nach den gemessenen Daten, Bestimmen (120), mithilfe der Steuereinheit, des Zeitpunkts, zu dem eine Anweisung für einen Abtransport- oder Versorgungsauftrag an eine mobile Plattform zu übertragen ist, damit die mobile Plattform vor oder zu dem Zeitpunkt unter der Haspel positioniert ist, die von einer Maschine zur Herstellung von Reifenrohlingen abtransportiert werden soll, zu welchem die Haspel abtransportiert werden soll, und/oder damit die Haspel, die eine Maschine zur Herstellung von Reifenrohlingen versorgen soll, mittels einer mobilen Plattform vor oder zu dem Zeitpunkt, zu welchem die Haspel in die Maschine zur Herstellung von Reifenrohlingen übertragen werden soll, in unmittelbarer Nähe der Maschine zur Herstellung von Reifenrohlingen positioniert wird,
Übertragen einer Anweisung für einen Abtransport- (500) oder Versorgungsauftrag (300) einer Haspel an eine mobile Plattform zum zuvor bestimmten Zeitpunkt,
Verlagern (510) der mobilen Plattform, so dass sie unter der Haspel positioniert ist, die von einer Maschine zur Herstellung von Reifenrohlingen abtransportiert werden soll, oder Verlagern (330) der mobilen Plattform, die die Haspel trägt, die eine Maschine zur Herstellung von Reifenrohlingen versorgen soll, so dass sie in unmittelbarer Nähe der Maschine zur Herstellung von Reifenrohlingen positioniert ist.

2. Verfahren nach dem vorhergehenden Anspruch, wobei die Mittel zur Messung (65) der Produktmenge an den Maschinen zur Herstellung (14) von Reifenrohlingen angeordnet sind und die Kommunikationsmittel mit Kommunikationsmitteln der Herstellungsmaschinen übereinstimmen.

3. Verfahren nach einem der vorhergehenden Ansprüche, wobei jede Haspel (36) Mittel zur Identifikation der Haspel, vorzugsweise einen Chip vom RFID-Typ, und Mittel zur Lokalisierung der Haspel, vorzugsweise einen Bluetooth-Beacon, aufweist.

4. Verfahren nach einem der vorhergehenden Ansprüche, wobei die Maschine zur Herstellung von Reifenrohlingen wenigstens eine Aufnahme (62), in welche eine Haspel (36) von einer mobilen Plattform (40) eingesetzt werden kann, und zwei gesonderte Zugänge zu der Aufnahme umfasst, die von einer mobilen Plattform, die eine Haspel trägt, benutzt werden können, wobei das Verfahren die folgenden aufeinanderfolgenden Schritte umfasst:
Verlagern einer ersten mobilen Plattform, die eine erste Haspel trägt, bis zu einer Position, die an einen ersten Zugang angrenzt,
Verlagern einer zweiten Plattform, die eine zweite Haspel trägt, durch einen zweiten Zugang (64), um die zweite Haspel aus der Aufnahme abzutransportieren,
Verlagern der ersten mobilen Plattform durch den ersten Zugang und Einsetzen der ersten Haspel in die Aufnahme.

5. Verfahren nach einem der vorhergehenden Ansprüche, wobei jede mobile Plattform (40) wenigstens ein Radar umfasst, wobei das Verfahren bei den Schritten des Verlagerns der mobilen Plattform die folgenden aufeinanderfolgenden Schritte umfasst:
Abtasten der Umgebung der Maschine zur Herstellung (14) von Reifenrohlingen mithilfe des Radars,
Identifizieren der Maschine zur Herstellung von Reifenrohlingen,
Umfahren der Hindernisse, die beim Verlagern der mobilen Plattform identifiziert werden.

6. Verfahren nach einem der vorhergehenden Ansprüche, wobei die Steuereinheit (39) der Übertragungseinrichtung (38) mit einem Steuerungsautomaten einer Produktionsstätte für Reifenrohlinge kommuniziert, in der sich die Maschine zur Herstellung von Reifenrohlingen befindet, die mit Elastomerprodukten (12) zu versorgen ist.

7. Verfahren nach einem der vorhergehenden Ansprüche, umfassend den folgenden Schritt:
nach Erhalt einer Information über den Abschluss des Versorgungs- oder Abtransportauftrags durch eine mobile Plattform, Übertragen einer Anweisung an die mobile Plattform (40), um einen neuen Versorgungs- oder Abtransportauftrag zu beginnen, mithilfe der Steuereinheit (39).

8. Verfahren nach einem der vorhergehenden Ansprüche, wobei jede mobile Plattform (40) auf Antriebsrädern montiert ist und Motoren, die den Antrieb der Räder sicherstellen, und Batterien zur Stromversorgung umfasst, wobei das Verfahren den folgenden Schritt umfasst:
nachdem die mobile Plattform den Stand ihrer Batterien überprüft hat, Beginnen eines neuen Versorgungs- oder Abtransportauftrags.

9. Verfahren nach dem vorhergehenden Anspruch, wobei die Übertragungseinrichtung eine Dockingstation umfasst, die geeignet ist, die Batterien einer mobilen Plattform (40) zu laden, wobei das Verfahren den folgenden Schritt umfasst:
sobald der Stand ihrer Batterien unter eine vorbestimmte Grenze gesunken ist, Verlagern einer mobilen Plattform bis zur Dockingstation und Laden der mobilen Plattform.

10. Einrichtung zur Übertragung (38) von Haspeln (36) zur Versorgung von Maschinen zur Herstellung (14) von Reifenrohlingen mit Elastomerprodukten (12), wobei jedes Produkt auf einer Spule (22) aufgewickelt ist, wobei die Einrichtung eine Steuereinheit (39), Haspeln und wenigstens eine eigenständige mobile Plattform (40), die geeignet ist, eine Haspel zu tragen und zu verlagern, umfasst, wobei jede Haspel geeignet ist, eine Spule zu tragen und mit der Maschine zur Herstellung von Reifenrohlingen so zusammenzuwirken, dass das auf die Spule aufgewickelte Produkt abgewickelt und die Maschine mit dem Produkt versorgt wird, wobei die Einrichtung **dadurch gekennzeichnet ist, dass** die Einrichtung (38) Mittel zur Bewertung des Zustands der Haspeln, wobei die Bewertungsmittel Mittel zur Messung (65) der Menge eines Produkts aufweisen, das auf Spulen gewickelt ist, die von den Haspeln getragen werden, und Kommunikationsmittel umfasst, die geeignet sind, die Daten, die von den Messmitteln gemessen werden, an die Steuereinheit (39) zu übertragen.

## Claims

1. Method for transferring unwinders (36) for supplying elastomeric products (12) to green tyre manufacturing machines (14) using a transfer facility (38), each product being wound on a reel (22), the said facility comprising a control unit (39), unwinders (36), and at least one autonomous mobile platform (40) able to support and to move a unwinder, each unwinder being able to support a reel and to collaborate with the green tyre manufacturing machine in such a way as to unwind the product wound on said reel and supply said machine with product, the method being **characterized in that** said facility comprises evaluation means for evaluating the state of the unwinders, said evaluation means comprising measurement means (65) for measuring the quantity of product wound on reels supported by the said unwinders, and communication means able to transmit the data measured by said measurement means to the control unit, the method comprising the following successive operations:
measuring (100) the quantity of product wound on the reels supported by the said unwinders supplying the green tyre manufacturing machines, using the measurement means, and communicating (110) the measured data to the control unit using the communication means,
on the basis of the measured data, determining (120), using the control unit, the moment at which to transmit a removal or supply mission instruction to a mobile platform so that the mobile platform becomes positioned underneath the unwinder that is intended to be removed from a green tyre manufacturing machine before or at the moment at which the unwinder is to be removed, and/or in such a way that the unwinder intended to supply a green tyre manufacturing machine becomes positioned in the immediate vicinity of the said green tyre manufacturing machine by means of a mobile platform before or at the moment at which the unwinder is to be transferred into the green tyre manufacturing machine,
transmitting to a mobile platform at the previously-determined moment, mission instructions to remove (500) or to supply (300) a unwinder,
moving (510) the mobile platform in such a way that it becomes positioned underneath the unwinder that is intended to be removed from a green tyre manufacturing machine, or moving (330) the mobile platform supporting the unwinder intended to supply a green tyre manufacturing machine so that it becomes positioned in the immediate vicinity of the green tyre manufacturing machine.

2. Method according to the preceding claim, wherein the measurement means (65) for measuring the quantity of product are arranged on the green tyre manufacturing machines (14) and said communication means are coincident with the communication means of said manufacturing machines.

3. Method according to one of the preceding claims, wherein each unwinder (36) comprises unwinder identification means, preferably a chip of the RFID type, and unwinder location means, preferably a Bluetooth beacon.

4. Method according to one of the preceding claims, wherein the green tyre manufacturing machine comprises at least one housing (62) in which a unwinder (36) is able to be housed by a mobile platform (40), and two distinct ways of accessing the said housing, which can be used by a mobile platform supporting a unwinder, the method comprising the following successive operations:
moving a first mobile platform supporting a first unwinder as far as a position adjacent to a first access,
moving a second platform supporting a second unwinder through a second access (64) so as to remove the second unwinder from the housing,
moving the first mobile platform through the first access and housing the first unwinder in the housing.

5. Method according to one of the preceding claims, wherein each mobile platform (40) comprises at least a radar, the method comprising, during the operations of moving the mobile platform, the following successive operations:
scanning the environment of the green tyre manufacturing machine (14) using the radar,
identifying the green tyre manufacturing machine,
circumnavigating the identified obstacles when moving the mobile platform.

6. Method according to one of the preceding claims, wherein the control unit (39) of the transfer facility (38) communicates with an automated controller of a green tyre manufacturing workshop in which the green tyre manufacturing machine that is to be supplied with elastomeric products (12) is situated.

7. Method according to one of the preceding claims, comprising the following operation:
after having received information that a mobile platform has accomplished its mission to supply or to remove, transmitting to the mobile platform (40), using the control unit (39), an instruction to begin a new supply or removal mission.

8. Method according to one of the preceding claims, wherein each mobile platform (40) is mounted on driven wheels and comprises motors that drive the wheels and batteries supplying electrical power, the method comprising the following operation:
after the mobile platform has verified its battery level, beginning a new supply or removal mission.

9. Method according to the preceding claim, wherein the transfer facility comprises a docking station able to charge the batteries of a mobile platform (40), the method comprising the following operation:
as soon as its battery level drops below a predetermined limit, moving a mobile platform to the docking station and charging the mobile platform.

10. Facility (38) for transferring unwinders (36) for supplying elastomeric products (12) to green tyre manufacturing machines (14), each product being wound on a reel (22), the said facility comprising a control unit (39), unwinders, and at least one autonomous mobile platform (40) able to support and to move a unwinder, each unwinder being able to support a reel and to collaborate with the green tyre manufacturing machine in such a way as to unwind the product wound on said reel and supply said machine with product, the facility being **characterized in that** said facility (38) comprises evaluation means for evaluating the state of the unwinders, said evaluation means comprising measurement means (65) for measuring the quantity of product wound on reels supported by the said unwinders, and communication means able to transmit the data measured by said measurement means to the control unit (39).
